# EUROPEAN PATENT APPLICATION

(11) **EP 3 835 213 A1**
(43) Date of publication of application: **16.06.2021**
(21) Application number: 19214329.5
(22) Date of filing: 09.12.2019
(51) Int. Cl.: B64D 27/24, B64C 39/02, B64B 1/40, B64B 1/00, C25B 1/02, A63B 35/12, B63C 11/46

(54) **LIFT AND DRIVE UNIT, AIRCRAFT AND SUBMARINE VEHICLE**

(71) Applicant: 2706649 Ontario Ltd, Aurora, Ontario L4G 6W2 (CA)
(72) Inventor: FERTMAN, MArk, Toronto, Ontario M2N 1P5 (CA); CAMPEAU, Gerard, Newmarket, Ontario L3X 3J2 (CA)
(74) Representative: Heinze, Ekkehard

(57) **Abstract**

Lift and drive unit of an aircraft or submarine vehicle, comprising a hydrogen based drive component for providing a forward drive force to move the aircraft or vehicle over ground, a hydrogen-based lift component for providing an upward drive force to move the aircraft or vehicle upward, and a hydrogen generating apparatus, connectable to both the drive component and the lift component, for providing the drive and lift components with hydrogen which is produced within the lift and drive unit.

## Description

The invention relates to a lift and drive unit of an aircraft or submarine vehicle which is fueled with hydrogen. It is further related to an aircraft and to a submarine vehicle which are provided with such lift and drive unit.

Hydrogen is supposed to be an important fuel for future land, water and air vehicles which are provided with a fuel cell or with a combustion engine which is adapted to be fueled with hydrogen. Its major advantage is the lack of any harmful emissions, and hydrogen is an inexhaustible fuel.

Whereas most of the efforts for developing hydrogen-driven vehicles are in the fields of automotive and cargo and cruise ships, recently hydrogen-based drive systems have been proposed even for drones and for submarine vehicles, see e.g. "FCair - The Complete Hydrogen Solution for Commercial UAVs", www.ballard.com/docs/default-source/uav or "Submarines - ThyssenKrupp Marine Systems", www.thyssenkrupp.marinesvsteins.com/submarines or "Pioneers in the submarine market", https://new.siemens.com/global/markets/marine/submarines.

All well-known approaches in this regard rely on hydrogen which is produced in advance and stored in a tank of the vehicle under very high pressure. The respective distribution and storage systems have to fulfil very high safety requirements and are, thus, costly and difficult to handle and maintain.

It is, therefore, an object of the invention to provide a lift and drive unit for aircraft or submarine vehicles, which is advantageous over prior drive systems with regard to safety requirements and costs and which can, in particular, be used in small and light-weight aircraft and submarine vehicles with high efficiency.

This and other objects are solved by a lift and drive unit according to claim 1. Advantageous embodiments of the invention are subject of claims 2 - 9. Furthermore, an aircraft according to claim 10 is disclosed, and still further a submarine vehicle according to claim 13 is disclosed.

According to an aspect of the invention, the lift and drive unit comprises a drive component for providing a forward drive force to move the aircraft or vehicle over ground and a lift component for providing an upward drive force to move the aircraft or vehicle upward, both of which are fueled with hydrogen.

Herein, the terms "fuel" or "fueled" are not restricted to a fuel for a combustion engine but to be understood in a broad meaning, as the substance to operate the lift and drive unit, be it in a fuel cell or combustion engine or simply filled into a balloon to raise a respective vehicle from ground. The terms "forward drive force" or "upward drive force", respectively, are likewise to be understood in a broad meaning, as forces which have at least a forward or upward vector component, respectively.

According to a second aspect of the invention, the lift and drive unit comprises a hydrogen-generating apparatus, connectable to both the drive component and the lift component, for fueling the drive and lift components with hydrogen which is produced within the unit. According to the second aspect, the hydrogen-generating apparatus can be of a type which contains at least a cathode and a hydrogen-generating anode, emerged into an aqueous electrolyte contained in a vessel, and/or (additional) hydrogen-generating elements between the cathode and a simple anode. A new, highly efficient apparatus of such type is subject of the co-pending European Patent Application File No. EP 19212000 of the applicant.

The on-board generation of hydrogen makes it possible to operate the lift and drive unit without previously stored hydrogen, i.e. in an aircraft or submarine vehicle which does not necessarily contain a high-pressure hydrogen tank and which, therefore, does not suffer from the drawbacks of such tank and its associated high-pressure equipment. Even if, in embodiments of the invention, in addition to the hydrogen-generating apparatus a hydrogen tank is provided in the aircraft or submarine vehicle, such tank and the corresponding equipment can be adapted to much lower pressures and, thus, have a simpler construction and less safety features, for the sake of lower costs and easier handling and maintenance.

In an embodiment of the invention, the drive component comprises a fuel cell coupled to at least one electric motor. The fuel cell, as well as the electric motor, can be of a conventional type which has proven to be applicable in an aircraft or a submarine vehicle, respectively, and described in the above-referenced publications. As a matter of fact, the drive component can comprise more than one motor, e.g. for driving more than one rotor or propeller of an aircraft or submarine vehicle.

In another embodiment, the drive component comprises a combustion engine. Such combustion engine can be mechanically connected to a rotor or e.g. to a pump of a waterjet drive. As a matter of fact, in submarine applications a combustion engine would typically be operated in an emerged status of the submarine vehicle, as it requires oxygen to work.

In a further embodiment of the invention, the lift component comprises a balloon connected to the hydrogen-generating apparatus through a first control valve. Controlled filling of the balloon with hydrogen from the on-board generator provides for a predetermined upward drive force, in particular if a second control valve for deflating the balloon in an controllable manner is provided, too. A three-way valve can be arranged between the hydrogen-generating apparatus and the balloon and a fuel cell or combustion engine, to control the respective amount of hydrogen which is delivered into the balloon and to the fuel cell or combustion engine, respectively.

In another embodiment, the lift component comprises at least one electric motor coupled to a rotor. In such embodiment, an aircraft would work in a helicopter mode, rather than in a balloon mode. For special purposes, a combination of a balloon component and an electric motor, wherein the lift component can be considered. In still another embodiment, applicable to a submarine vehicle, the lift component can contain an electric motor coupled to a pump, to form a waterjet drive.

In a further embodiment, the hydrogen-generating apparatus is a combined hydrogen-generating and electrical energy generating apparatus and the drive component and/or lift component comprises at least one electric motor which is connected to an electrical energy output of the combined hydrogen-generating and electrical energy generating apparatus. Such combined apparatus is part of the disclosure of the above-referenced co-pending European patent application of the applicant.

This latter embodiment is particularly advantageous insofar as, in principle, the combined hydrogen-generating and electrical energy generating apparatus can provide the lift component with hydrogen and electric motor(s) in the drive component with electrical energy, in principle without having a fuel cell on board.

As mentioned further above, in a further embodiment a hydrogen tank for storing hydrogen, to buffer the hydrogen supply of the drive component and/or the lift component can be provided. Such hydrogen tank will typically be a pressure tank and have an input port to fill it with externally produced hydrogen.

Additionally, the tank can have a connection to the on-board hydrogen-generating apparatus, to store internally produced hydrogen, too. In such embodiment, a multi-way control valve unit can be provided at an output of the tank and of the hydrogen-generating apparatus, for controlling the delivery of stored hydrogen and/or of internally produced hydrogen to the drive component and/or the lift component.

In a further embodiment, the above-referenced balloon can serve as a hydrogen reservoir for temporarily storing internally produced hydrogen and for delivering it to a fuel cell or combustion engine in case of need, to boost the real-time hydrogen delivery from the hydrogen-generating apparatus.

In a further embodiment, the lift and drive unit comprises a battery and/or a supercap connectable to at least the drive component, to buffer the electrical energy supply thereof. Such battery or supercap can be charged in advance of operating the lift and drive unit and/or in operation thereof from the above-referenced combined hydrogen-generating and electrical energy generating apparatus.

The inventive aircraft can be a drone which, in particular, comprises a plurality of electric motors, each coupled to a rotor, and a balloon to be filled with hydrogen from the hydrogen-generating apparatus, to provide the upward force. As is well-known in the art, drones with such types of drive system can be used for many purposes, including photo or video applications and the short-distance delivery of items.

In an alternative embodiment, the aircraft comprises a single combustion engine coupled to a single rotor, for providing both a forward drive force and upward drive force. Even this embodiment can be a drone, in particular of a bigger type which is more adapted to long-term and long-distance applications, including military applications.

In an embodiment of the inventive submarine vehicle, this is an unmanned submarine vehicle or driver assistance vehicle. Such vehicle or apparatus, respectively, can e.g. help a diver to carry heavy objects from a submarine destination, or can even be controlled on a remote basis in mine sweep or other hazardous applications.

In a further embodiment, the drive unit of the submarine vehicle comprises a fuel cell electrically coupled to a single electric motor which is coupled to a single rotor for providing at least the forward drive force. In principle, the single rotor can be adapted and operated to provide not only the forward drive force but even the upward drive force. The motor/rotor blade can, insofar, constitute both the drive and lift components of the submarine, together with a motion control unit. In another embodiment, the submarine has an independent lift unit, which comprises a balloon to be filled with hydrogen from the hydrogen-generating apparatus, to provide the upward force. This reduces the electrical energy consumption and can, thus, extend the action time of the submarine.

Further embodiments and aspects of the invention are disclosed below, in relation to the drawing, wherein
- Fig. 1: shows a schematic block diagram of a simple lift and drive unit according to the invention,
- Fig. 2: shows another embodiment of a lift and drive unit according to the invention,
- Fig. 3: shows a more sophisticated embodiment of a simple lift and drive unit according to the invention,
- Fig. 4A and 4B: show a drone according to an embodiment of the invention, in a perspective view in a first mode of operation and in a side view in a second mode of operation, and
- Fig. 5A and 5B: show a diver assistance vehicle, as a further embodiment of the invention in two states of an exemplary use.

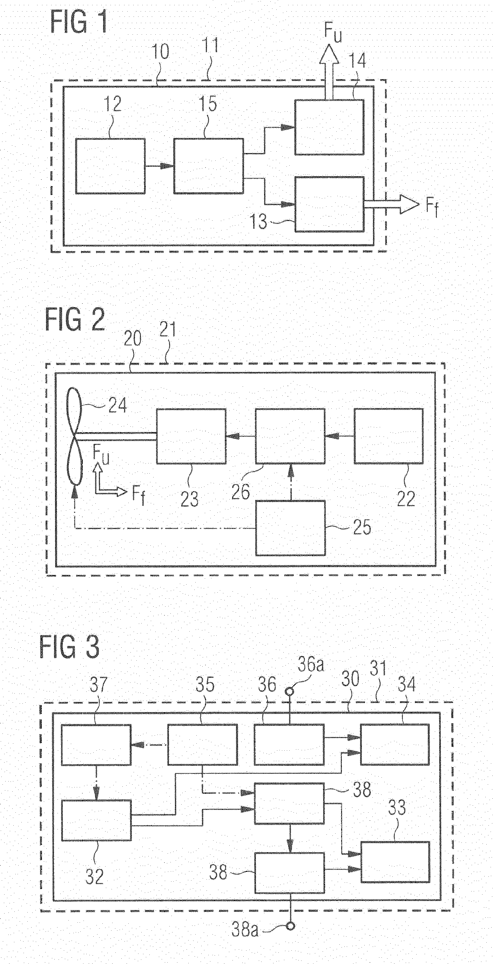

Fig. 1 shows schematically a lift and drive unit 10 of a vehicle 11, which comprises a hydrogen-generating apparatus 12, a hydrogen-based drive component 13 for providing a forward drive force F_{f} of the vehicle 11 and a hydrogen-based lift component 14 for providing an upward drive force Fᵤ to move the vehicle upward. Both the drive component 13 and the lift component 14 have hydrogen inlets (not specifically designated), which are connected to a hydrogen outlet of the hydrogen-generating apparatus 12 through a hydrogen delivery control unit 15.

The hydrogen delivery control unit 15 is adapted to control the flow of hydrogen which is generated in the hydrogen-generating apparatus on-board of the vehicle 11 to the drive unit 13 and the lift unit 14 according to a motion control program and optionally in dependence of signals of sensors (not shown) which detect the motion status and possibly external conditions, to steer the vehicle 11 to a predetermined destination or on a predetermined route.

Fig. 2 schematically shows, likewise as a functional block diagram, a further lift and drive unit 20 of a vehicle 21 which is, like the embodiment of Fig. 1, fueled by a hydrogen-generating apparatus 22. However, different from the embodiment of Fig. 1, in the lift and drive unit 20 comprises a single engine 23, e.g. a combustion engine, which is arranged for providing, by means of a rotor 24 mechanically connected to the engine 23, both a forward drive force F_{f} and an upward drive force Fᵤ, in dependence on control signals which are prepared in and output from a motion control unit 25.

The control signals from the motion control unit 25 are provided to the engine/rotor combination 23/24 and affect the operation thereof in a manner which is well-known in the prior art. Furthermore, the lift and drive unit 20 comprises a hydrogen buffer tank 26 arranged between the outlet of the hydrogen generating apparatus 22 and the hydrogen inlet of the engine 23, for buffering the flow of hydrogen delivered to the engine in real-time, in accordance with a motion control program which is stored in the motion control unit 25.

Fig. 3 shows, as a further functional block diagram, another lift and drive unit 30 of a vehicle 31. In this figure, components which are identically or functionally equivalent to components shown in Fig. 1 or 2, are designated with corresponding reference numerals and will not again be described in detail.

Within the lift and drive unit 30, reference numeral 32 designates a combined hydrogen-generating/electrical energy-generating apparatus 32, which can be controlled to deliver either hydrogen or electrical energy, by means of a generator mode control unit 37. That control unit 37 is activated by a first control signal which is output by a motion control unit 35.

Hydrogen generated by the generator 32 is delivered to a first inlet of the lift component 34. The lift component 34 has a second inlet which is connected to a hydrogen pressure tank 36. That tank 36 is a reservoir for storing pre-generated hydrogen, which is delivered to the lift and drive unit 30 through an external hydrogen inlet 36a. Different from the embodiment of Fig. 2, this tank 36 is not a buffer tank and, thus, not connected to the hydrogen outlet of the generator 32.

On the other hand, the combined generator 32 is electrically connected to the drive unit 33, which in this embodiment does not necessarily contain an internal generator of electrical energy but just one or more electric motor(s) and rotor(s) etc. The connection is through an electrical energy distribution unit 38 which delivers the electrical energy to the drive unit 33 and/or to a buffer battery 38, in portions which are determined in response to a second control signal which is output by the motion control unit 35. The buffer battery 38 has an external recharge port 38a for externally charging it prior to operating the vehicle.

Like the hydrogen pressure tank 36, the buffer battery 38 can be of any suitable commercially available type, and it can be constituted by plural battery elements or one or more supercapacitor(s).

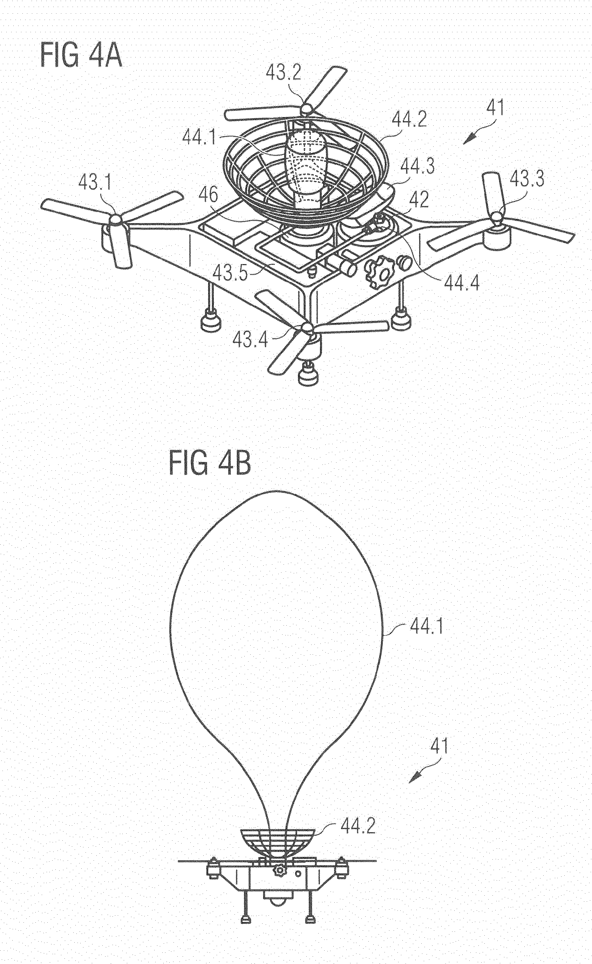

Fig. 4A and 4B illustrate an exemplary vehicle, wherein the inventive lift and drive unit is applied, i.e. a drone (quadrocopter) 41. A drive unit (not separately designated) of the quadrocopter 41 is constituted by four motor/propeller units 43.1, 43.2, 43.3 and 43.4. A lift unit (likewise not separately designated) comprises a balloon 44.1, protected by a basket guard 44.2 and provided with a filling funnel 44.3 and a pressure release valve 44.4.

For providing the hydrogen required to fill the balloon 44.1 and to fuel the drive unit, the quadrocopter 41 comprises a hydrogen-generating apparatus 42 and a hydrogen tank 46, both of which are connected or can be connected, respectively, to a fuel cell 43.5 which forms part of the drive unit.

For raising the quadrocopter, hydrogen from the hydrogen generator 42 and/or from the hydrogen tank 46 is filled into the balloon 44.1, controlled by motion control unit (not shown). An operation mode with the balloon 44.1 filled with hydrogen, is shown in Fig. 4B.

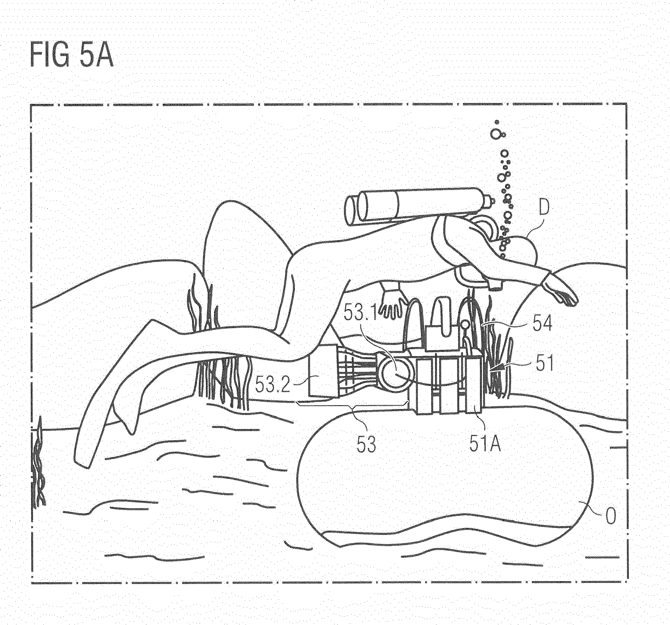

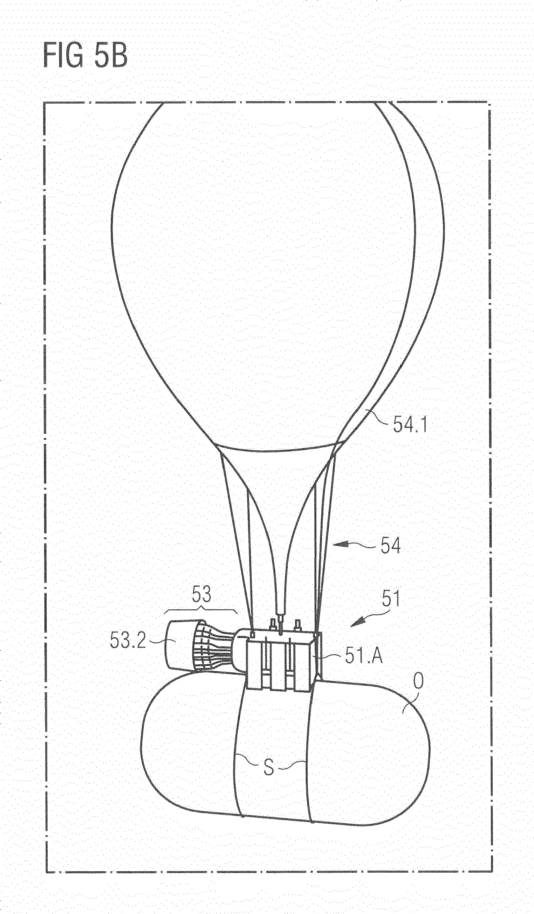

Figs. 5A and 5B illustrate, as a further embodiment of the invention, a diver assistance apparatus 51 in a first and a second state of its use to carry an object from the ground of the sea to the surface. The diver assistance apparatus 51 is, in an inoperative state, guided to an object O by a diver D and is put onto the object (as shown in Fig. 5A) and fixed thereto with straps S (shown in Fig. 5B).

The apparatus 51 comprises a lift component 54 for raising the object from ground and a drive unit 53 for moving it over ground to a predetermined destination. The lift unit comprises a balloon 54.1 and associated equipment (not shown) for filling the balloon with hydrogen which is produced by a hydrogen-generating apparatus (not shown) within an apparatus body 51A. The drive unit 53 comprises an electric motor 53.1 and a propeller 53.2 connected to the motor and (not shown) a fuel cell which is contained in the apparatus body 51A.

The diver manually starts the operation of the diver assistance apparatus 51, firstly actuating a valve to fill the balloon 54.1 with hydrogen and then starting the operation of the fuel cell and motor, to drive the propeller 53.2, which results in a combined upward and forward motion of the apparatus 51, together with the object O attached thereto.

The implementation of the invention is not restricted to the above-explained embodiments and aspects but likewise possible in manifold combinations thereof, within the scope of the appending claims.

## Claims

1. Lift and drive unit of an aircraft or submarine vehicle, comprising:
- a hydrogen-based drive component for providing a forward drive force to move the aircraft or vehicle over ground,
- a hydrogen-based lift component for providing an upward drive force to move the aircraft or vehicle upward, and
- a hydrogen generating apparatus, connectable to both the drive component and the lift component, for providing the drive and lift components with hydrogen which is produced within the lift and drive unit.

2. Lift and drive unit of claim 1, wherein the drive component comprises a fuel cell coupled to at least one electric motor, or a combustion engine.

3. Lift and drive unit of one of the preceding claims, comprising a hydrogen delivery control unit for controlling the delivery of hydrogen produced by the hydrogen generating apparatus to the drive component and to the lift component, to achieve or maintain an intended combination of a forward drive force and an upward drive force.

4. Lift and drive unit of one of the preceding claims, wherein the lift component comprises a balloon connected to the hydrogen generating apparatus through a first control valve.

5. Lift and drive unit of claim 4, wherein the lift component comprises a second control valve for deflating the balloon.

6. Lift and drive unit of one of the preceding claims, wherein the lift component comprises at least one electric motor coupled to a rotor.

7. Lift and drive unit of one of the preceding claims, wherein the hydrogen generating apparatus is a combined hydrogen generating and electrical energy generating apparatus and the drive component and/or lift component comprises at least one electric motor which is connected to an electrical energy output of the combined hydrogen generating and electrical energy generating apparatus.

8. Lift and drive unit of one of the preceding claims, comprising a hydrogen pressure tank connectable to at least one of the drive component and lift component, to buffer the hydrogen supply of the drive component and/or the lift component.

9. Lift and drive unit of one of the preceding claims, comprising a battery and/or a supercap connectable to at least the drive component, to buffer the electrical energy supply thereof.

10. Aircraft, in particular drone, comprising a lift and drive unit of one of the preceding claims.

11. Aircraft of claim 10, wherein the aircraft comprises a plurality of electric motors, each coupled to a rotor, and a balloon to be filled with hydrogen from the hydrogen generating apparatus, to provide the upward force.

12. Aircraft of claim 10, comprising a single combustion engine coupled to a single rotor, for providing both a forward drive force and upward drive force.

13. Submarine vehicle, in particular unmanned submarine vehicle or driver assistance vehicle, comprising a lift and a drive unit of one of claims 1-9.

14. Submarine vehicle of claim 13, wherein the drive unit comprises a fuel cell electrically coupled to a single electric motor which is coupled to a single rotor for providing at least the forward drive force.

15. Submarine vehicle of claim 13 or 14, comprising a balloon to be filled with hydrogen from the hydrogen generating apparatus, to provide the upward force.
